# EUROPEAN PATENT SPECIFICATION

(11) **EP 4 394 960 B1**
(45) Date of publication and mention of the grant of the patent: **22.07.2026**
(21) Application number: 23215404.7
(22) Date of filing: 11.12.2023
(51) Int. Cl.: H01M 8/18, H01M 50/183

(54) **BATTERY**
BATTERIE
BATTERIE

(30) Priority: 30.12.2022 KR 20220190427
(43) Date of publication of application: 03.07.2024
(73) Proprietor: Standard Energy Inc., Yuseong-gu, Daejeon 34014 (KR)
(72) Inventor: LEE, Dongyoung, 34014 Daejeon (KR); PARK, Sang-Hyun, 34014 Daejeon (KR)
(74) Representative: Vossius & Partner Patentanwälte Rechtsanwälte mbB

(56) References cited:
- US-B2- 11 387 479

## Description

The present disclosure relates to a battery, more particularly, a battery in which a metal ion dissolved in an electrolyte is oxidized and reduced to charge or discharge the battery.

Redox flow battery RFB is a system charged or discharged by oxidizing and reducing active materials in electrolytes, and the redox flow battery is operated by continuously circulating the electrolyte inside a stack using a fluid pump, where the actual electrochemical reaction occurs in the stack. While such the redox flow battery has advantages of long lifespan, high output and high capacity, there are problems of a large volume of the system and less flexibility in design due to a tank that stores the electrolyte and a fluid pump to flow the electrolyte. To address these problems, the inventors of the present invention developed a redox battery having no electrolyte tank and fluid pump. However, this new redox flow battery still has problems in respect of leaking of electrolyte between collectors and a frame, electrochemical corrosion of the collectors, deformation of the frame, high stress concentration in parts of the battery, and low productivity of the battery.

US 11 387 479 B2, forming the basis for the preamble of claim 1, discloses a redox flow battery which has the first and second electrodes separated by a membrane. Spacers are disposed between the membrane and the current collectors and accommodate the first and second electrodes. Layers of a dielectric material are disposed on another side of the current collectors not contacting the spacers. Two apertures are provided through the layers of a dielectric material and the current collectors to allow electrolyte to flow into the electrodes.

To overcome the above-noted disadvantages of the prior art, one objective of the present disclosure is to provide a battery, a volume of which can be minimized.

To overcome the above-noted disadvantages of the prior art, another objective of the present disclosure is to provide a battery, in which leaking of electrolyte between collectors and a frame can be effectively prevented.

To overcome the above-noted disadvantages of the prior art, another objective of the present disclosure is to provide a battery, a manufacturing process of which can be more simplified.

Aspects according to the present disclosure are not limited to the above ones, and other aspects and advantages that are not mentioned above can be clearly understood from the following description and can be more clearly understood from the embodiments set forth herein and in the appended claims. Additionally, the aspects and advantages in the present disclosure can be realized via means and combinations thereof that are described in the appended claims.

To overcome the above-noted disadvantages, a battery according to an embodiment may include a first current collector; a second current collector spaced apart from the first current collector; a separator disposed between the first current collector and the second current collector; a frame forming a first electrode reservoir between the first current collector and the separator, and a second electrode reservoir between the second current collector and the separator; a first adhesive member binding the first current collector and the frame to each other; a second adhesive member binding the second current collector and the frame to each other; and an inter-electrode communication part configured to allow the first electrode reservoir and the second electrode reservoir to be in fluidic communication with each other. At least part of the inter-electrode communication part may be formed by the first adhesive member and the frame or the second adhesive member and the frame. The first electrode reservoir and the second electrode reservoir contain a first liquid electrode and a second liquid electrode, respectively. The binding of the first and second current collectors to the frame respectively by the first and second adhesive members are made by the adhesive property of the first and second adhesive members.

To overcome the above-noted disadvantages, a battery according to an embodiment may include a first current collector; a second current collector spaced apart from the first current collector; a separator disposed between the first current collector and the second current collector; a frame forming a first electrode reservoir between the first current collector and the separator and a second electrode reservoir between the second current collector and the separator; a first adhesive member binding the first current collector and the frame to each other; a second adhesive member binding the second current collector and the frame to each other; and an inter-electrode communication part that allows the first electrode reservoir and the second electrode reservoir to communicate with each other. At least part of the first adhesive member and the second adhesive member may be disposed more outside rather than the inter-electrode communication part in an in-plane direction from the center of the frame.

To overcome the above-noted disadvantages, a battery according to an embodiment may include a first liquid electrode to undergo a first half reaction; a second electrode to undergo a second half reaction; a separator disposed between the first liquid electrode and the second liquid electrode; a frame to support the separator; a first current collector electrically connected with the first liquid electrode; a second current collector electrically connected with the second liquid electrode; a first adhesive member binding the first current collector and the frame to each other; a second adhesive member binding the second current collector and the frame to each other; and an inter-electrode communication part in which the first liquid electrode and/or the second liquid electrode flows. The first liquid electrode and/or the second liquid electrode flowing in the inter-electrode communication part may contact the first adhesive member and/or the second adhesive member.

To overcome the above-noted disadvantages, a battery according to an embodiment may include a first liquid electrode to undergo a first half reaction; a second electrode to undergo a second half reaction; a separator disposed between the first liquid electrode and the second liquid electrode; a frame to support the separator; a first current collector electrically connected with the first liquid electrode; a second current collector electrically connected with the second liquid electrode; an inter-electrode communication part in which the first liquid electrode and/or the second liquid electrode flows; a first adhesive member binding the frame and the first current collector to prevent the first liquid electrode or the second liquid electrode flowing in the inter-electrode communication part from contacting the first current collector; and a second adhesive member binding the frame and the second current collector to prevent the first liquid electrode or the second liquid electrode in the inter-electrode communication part from contacting the first current collector.

To overcome the above-noted disadvantages, a battery according to an embodiment may include a first liquid electrode to undergo a first half reaction; a second electrode to undergo a second half reaction; a separator disposed between the first liquid electrode and the second liquid electrode; a frame to support the separator and forming a space in which the first liquid electrode and the second liquid electrode flow; a first solid electrode impregnated with the first liquid electrode; a second solid electrode impregnated with the second liquid electrode; a first current collector electrically connected with the first liquid electrode; a second current collector electrically connected with the second liquid electrode; a first adhesive member binding the first current collector and the frame to each other; and a second adhesive member binding the second current collector and the frame to each other. The first adhesive member and the second adhesive member may be disposed in a space defined by the frame, in which the first solid electrode and the second solid electrode are not disposed.

The first adhesive member may be applied to the first current collector first and then the first current collector having the first adhesive member is adhered to the frame, or vice versa. Alternatively, the first adhesive member may be applied to both the first current collector and the frame to adhere the two together. In a similar way, the second adhesive member may be applied to the second current collector first and then the second current collector having the second adhesive member is adhered to the frame, or vice versa. Alternatively, the second adhesive member may be applied to both the second current collector and the frame to adhere the two together.

The batteries explained above may comprise an injection hole in fluidic communication with the first electrode reservoir and the second electrode reservoir to inject a liquid electrode, which constitutes the first and second liquid electrode, from the outside therethrough.

In the batteries above, one end of the injection hole may be in line with an outer circumferential flat surface of the frame.

In the batteries above, the injection hole may not be surrounded by a portion of the frame protruding from the outer circumferential flat surface of the frame.

In the batteries above, the injection hole may be formed together with a frame body by molding, or formed by drilling the outer circumferential flat surface of a frame body after the molding of the frame is completed.

The batteries explained above may further comprise a sealing member to block the injection hole after the liquid electrode is injected into the first electrode reservoir and the second electrode reservoir. The sealing member may comprise at least one of an acrylate-based adhesive, an acrylate-ester-based adhesive, an acrylate-ethylene-based adhesive, a polycarbonate-based adhesive, a polyethylene-based adhesive, an epoxy-based adhesive and an isocyanate-based adhesive, or the sealing member may be one of a solvent-type adhesive, an emulsion-type adhesive, a hot-melt type adhesive and a liquid-curing type adhesive, which is injected into the injection hole.

After the first liquid electrode and the second liquid electrode are injected into the first electrode reservoir and the second electrode reservoir in an amount that undergoes the first half reaction and the second half reaction, the injection hole is closed.

Specific details of other embodiments are described along with in the section of Detailed Description and Drawings.

The battery according to the present disclosure may have following one or more effects.

First, the frame and the current collector are bonded by using the adhesive member, thereby preventing the liquid electrode from leaking.

Second, the adhesive member may be disposed between the inter-electrode communication part and the current collector, thereby preventing electrochemical corrosion of the current collector due to a short circuit in the current when the liquid electrode flowing in the inter-electrode communication part contacts the current collector.

Third, the adhesive member may bind the outer peripheral portions of the frame and the outer peripheral portions of the current collector in the closed curve, thereby preventing deformation of the frame and leakage of the liquid electrode.

Fourth, the inter-electrode communication part may be relatively and uniformly formed in the frame, thereby preventing stress concentration in specific part and allowing the frame to be thinned to a predetermined width.

Specific effects are described along with the above-described effects in the section of Detailed Description.
FIG. 1 is an exploded perspective view of a battery according to an embodiment;
FIG. 2 is a perspective view of a battery according to an embodiment;
FIG. 3 is a cross sectional view of the battery shown in FIG. 2 along a 3-3 direction;
FIG. 4 is a perspective view of a battery module according to an embodiment;
FIG. 5 is a plane view of a battery according to an embodiment;
FIG. 6 is a front view of a frame according to an embodiment;
FIG. 7 is a rear view of a frame according to an embodiment;
FIG. 8 is a view showing flow of liquid electrode through an inter-electrode communication part of a battery according to an embodiment;
FIG. 9 is a cross sectional view of the frame shown in FIG. 7 along a 9-9 direction;
FIG. 10 is a cross sectional view partially showing a battery according to another embodiment; and
FIG. 11 is a cross sectional view partially showing a battery according to a further embodiment.

The above-described aspects, features and advantages are specifically described hereunder with reference to the accompanying drawings such that one having ordinary skill in the art to which the present disclosure pertains can easily implement the embodiments introduced in the following disclosure. In the disclosure, detailed descriptions of known technologies in relation to the disclosure are omitted if they are deemed to make the understanding of the disclosure unnecessarily vague. Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

Throughout the disclosure, each component can be provided as a single one or a plurality of ones, unless explicitly stated to the contrary.

Hereinafter, expressions of 'a component is provided or disposed in an upper or lower portion' may mean that the component is provided or disposed in contact with an upper surface or a lower surface. The present disclosure is not intended to limit that other elements are provided between the components and on the component or beneath the component.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Throughout the disclosure, the terms "A and/or B" as used herein can denote A, B or A and B, and the terms "C to D" can denote C or greater and D or less, unless stated to the contrary.

Hereinafter, referring to drawings for describe a secondary battery according to embodiments of the present disclosure will be described.

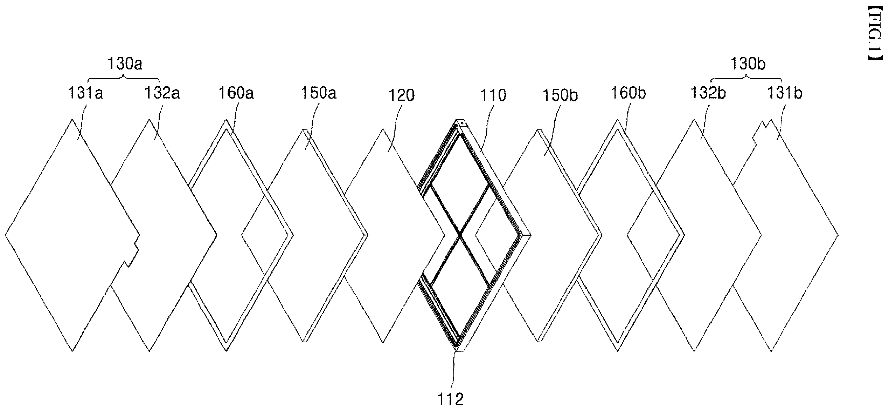

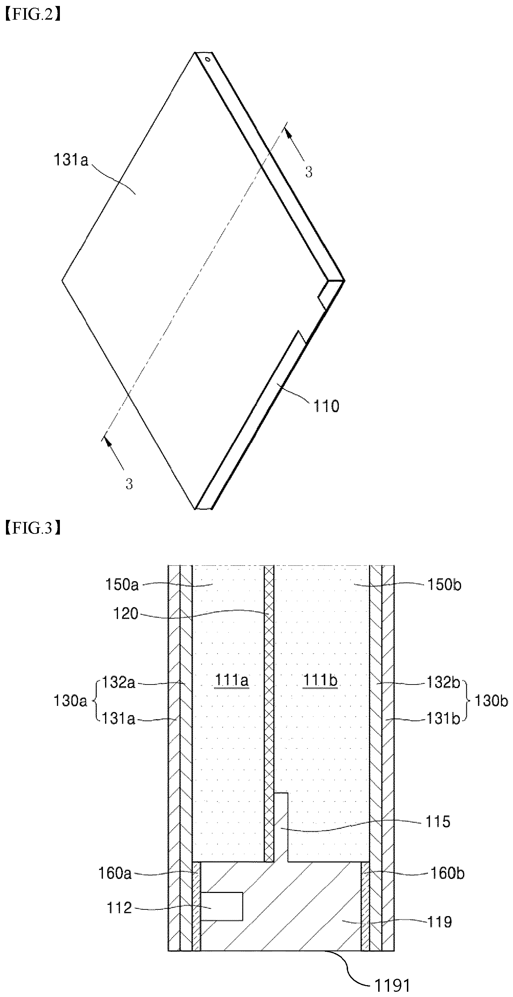

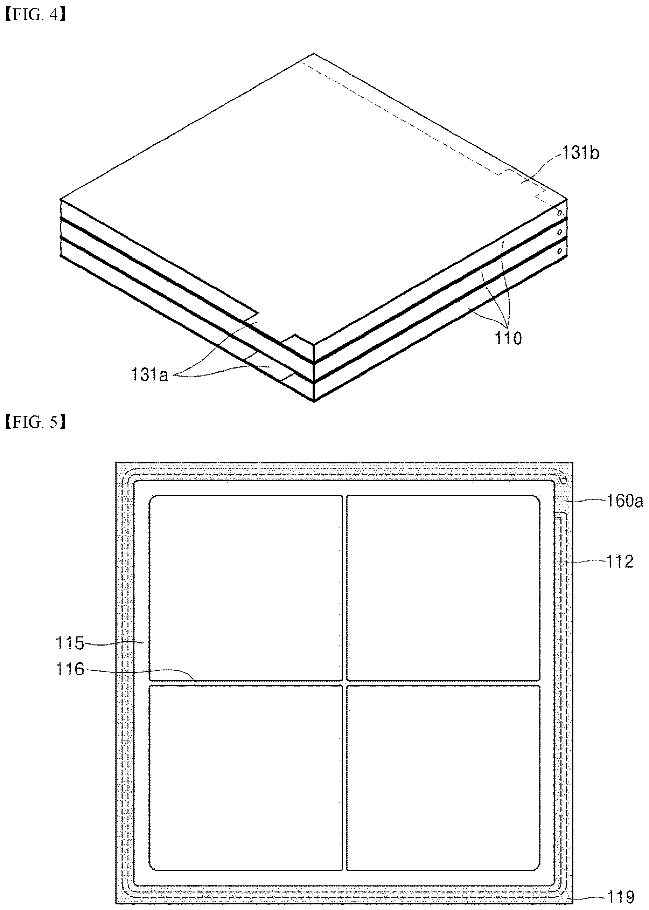

FIG. 1 is an exploded perspective view of a battery according to an embodiment. FIG. 2 is a perspective view of a battery according to an embodiment. FIG. 3 is a cross sectional view of the battery shown in FIG. 2 along a 3-3 direction. FIG. 4 is a perspective view of a battery module according to an embodiment.

The secondary battery according to the embodiment includes a first current collector 130a; a second current collector 130b spaced apart from the first current collector 130a; a separator 120 disposed between the first current collector 130a and the second current collector 130b; a frame defining a first electrode reservoir 111a and a second electrode reservoir 111b; a first liquid electrode stored in the first electrode reservoir 111a and configured to undergo a first half reaction; a second liquid electrode stored in the second electrode reservoir 111b and configured to undergo a second half reaction; and an inter-electrode communication part 112 to be in fluidic communication with the first electrode reservoir 111a and the second electrode reservoir 111b. The secondary battery may further include a first solid electrode 150a disposed in the first electrode reservoir 111a and impregnated with the first liquid electrode; and a second solid electrode 150b disposed in the second electrode reservoir 111b and impregnated with the second liquid electrode. The secondary battery may further include a first adhesive member 160a for binding the first current collector 130a and the frame 110 to each other; and a second adhesive member 160b for binding the second current collector 130b and the frame 110 to each other.

The first liquid electrode is an electrolyte in which an anode redox couple is dissolved. The anode redox couple may be realized as a material including at least one of vanadium (V), zinc (Zn), bromine (Br), chromium (Cr), manganese (Mn), titanium (Ti), iron (Fe), cerium (Ce), and cobalt (Co), and in this embodiment, it is a V²⁺/V³⁺ redox couple. The first liquid electrode may be an acidic aqueous solution that conducts electric current through ionization, and preferably contains sulfuric acid. In this embodiment, the first liquid electrode may be manufactured in a way that vanadylsulfate (VOSO₄) or vanadium pentoxide (V₂O₅) is dissolved in a sulfuric acid (H₂SO₄) solution.

The first liquid electrode undergoes the first half reaction. The first half reaction is as follows, and '→' represents the discharge reaction direction and '←' represents the charge reaction direction.

V²⁺ ←→ V³⁺ + e⁻

When discharging, vanadium divalent ions are oxidized to vanadium trivalent ions. When charging, vanadium trivalent ions are reduced to vanadium divalent ions.

The first liquid electrode may be surrounded by the frame 110, the first current collector 130a and the separator 120. The first liquid electrode may be prevented from flowing out in an in-plane direction between the first current collector 130a and the frame 110 by the first adhesive member 160a. Hereinafter, the in-plane direction refers to a direction parallel to the plane formed by the largest surface of the separator 120. The first liquid electrode may be stored in the first electrode reservoir 111a. The first liquid electrode may be impregnated into the first solid electrode 150a.

The first liquid electrode may be electrically connected with the first current collector 130a so that an electron may move to the first current collector 130a when discharging and an electron of the first current collector 130a may move to the first liquid electrode. The first liquid electrode may become in contact with the separator 120 so that a hydrogen cation (proton) is moved through the separator 120.

The second liquid electrode is an electrolyte in which the cathode redox couple is dissolved. The cathode redox couple may be realized as a material including at least one of vanadium (V), zinc (Zn), bromine (Br), chromium (Cr), manganese (Mn), titanium (Ti), iron (Fe), cerium (Ce), and cobalt (Co), and in this embodiment, it is a V⁴⁺/V⁵⁺ redox couple. The second liquid electrode may be an acidic aqueous solution that conducts electric current through ionization, and preferably contains sulfuric acid. In this embodiment, the second liquid electrode may be manufactured in a way that vanadylsulfate (VOSO4) or vanadium pentoxide (V2O5) is dissolved in a sulfuric acid (H2SO4) solution.

The second liquid electrode undergoes the second half reaction. The second half reaction is as follows, and '→' represents the discharge reaction direction and '←' represents the charge reaction direction.

V⁵⁺+ e ←→ V⁴⁺

When discharging, vanadium pentavalent ions are reduced to vanadium tetravalent ions. When charging, vanadium tetravalent ions are oxidized to vanadium pentavalent ions.

The second liquid electrode may be surrounded by the frame 110, the second current collector 130b and the separator 120. The second liquid electrode may be prevented from flowing out in the plane direction between the second current collector 130b and the frame 110 by the second adhesive member. The second liquid electrode may be stored in the second electrode reservoir 111b. The second liquid electrode may be impregnated into the second solid electrode 150b.

The second liquid electrode may be electrically connected with the second current collector 130b so that an electron may move to the second current collector 130b when charging and an electron of the second current collector 130b may move to the second liquid electrode. The second liquid electrode may become in contact with the separator 120 so that a hydrogen cation (proton) is moved through the separator 120.

As described above, the first liquid electrode and the second liquid electrode have the same component. The first liquid electrode and the second liquid electrode contain vanadium ions in an electrolyte of the same composition. Hereinafter, the first liquid electrode and the second liquid electrode are collectively referred to as liquid electrodes.

The frame 110 may have the shape of a hollow square. According to embodiments, the frame 110 may have the shape of a diamond, circle, triangle or polygon such as a pentagon or more. The frame may have a predetermined thickness to form the first electrode reservoir 111a and the second electrode reservoir 111b. Hereinafter, the out-of-plane direction refers to a direction passing through or crossing the in-plane direction (i.e., a direction parallel to the plane formed by the separator 120). The out-of-plane direction may include a thickness direction of the frame 110, which is perpendicular to the in-plane direction of the frame 110. The out-of-plane direction is not limited only to the direction perpendicular to the in-plane direction. In this sense, the term "out-of-plane directional" side or surface of an element refers to a side or surface of that element facing an out-of-plane direction. In the same manner, the term "in-plane directional" side or surface of an element refers to a side or surface of that element facing an in-plane direction.

The frame 110 has an outer peripheral portion aligned with an outer peripheral portion of a first carbon current collector 132a of the first current collector 130a and an outer peripheral portion of a second carbon current collector 132b of the second current collector 130b.

The first current collector 130a may be disposed in one side of the frame 110 and the second current collector 130b may be disposed in the other side of the frame 110 in the out-of-plane direction. More specifically, the first current collector 130a may be disposed in one end surface of the frame 110, and the second current collector 130b may be disposed in the other end surface of the frame 110, wherein the two end surfaces are opposite to each other in an out-of-plane direction. The hollow of the frame 110 may be closed by the first current collector 130a and the second current collector 130b. The frame 110 may be disposed between the first current collector 130a and the second current collector 130b to prevent the first liquid electrode and the second liquid electrode from leaking along the in-plane direction. The frame 110 may be coupled to the first current collector 130a by the first adhesive member 160a and the second current collector 130b by the second adhesive member 160b.

The separator 120 may be disposed in the hollow of the frame 110. The hollow of the frame 110 may be partitioned off into two spaces by the separator 120. The frame 110 may be coupled to the separator 120 by an adhesive member made of the same material as the first adhesive member 160a or the second adhesive member 160b.

The frame 110 may form the first electrode reservoir 111a between the first current collector 130a and the separator 120 and the second electrode reservoir 111b between the second current collector 130b and the separator 120.

The frame 110 may store the first liquid electrode and the second liquid electrode respectively in the first electrode reservoir 111a and the second electrode reservoir 111b. The first solid electrode 150a and the second solid electrode 150b may be disposed inside the frame 110. The first adhesive member 160a may be adhered to one outer peripheral portion of the frame 110 in the out-of-plane direction and the second adhesive member 160b may be adhered to the other outer peripheral portion of the frame 110 in the out-of-plane direction. In other words, the first adhesive member 160a may be adhered to one end surface of the frame 110 in the out-of-plane direction and the second adhesive member 160b may be adhered to the other end surface of the frame 110 in the out-of-plane direction.

The frame 110 may form the inter-electrode communication part 112 with the first adhesive member 160a or the second adhesive member 160b.

The inter-electrode communication part 112 may allow the first electrode reservoir 111a and the second electrode reservoir 111b be in fluidic communication with each other. The first liquid electrode and/or the second liquid electrode may move toward the opposite reservoir in the inter-electrode communication part 112. The inter-electrode communication part 112 may include a groove and a hole. The groove of the inter-electrode communication part 112 may be formed along an outer peripheral portion of the frame 110. The groove of the inter-electrode communication part 112 may be recessed into the frame 110 in the out-of-plane direction and extend in an in-plane direction. The hole of the inter-electrode communication part 112 may penetrate the frame 110 in the out-of-plane direction.

At least part of the inter-electrode communication part 112 may be formed by the first adhesive member 160a or the second adhesive member 160b and the frame 110. The inter-electrode communication part 112 may be disposed between the first adhesive member 160a and the second adhesive member 160b. The inter-electrode communication part 112 may have a first part extending in an in-plane direction and covered by the first adhesive member 160a, and a second part extending in another in-plane direction and covered by the second adhesive member 160b. The first liquid electrode and/or the second liquid electrode flowing in the inter-electrode communication part 112 may be in contact with the first adhesive member 160a and/or the second adhesive member 160b.

The first and second adhesive members 160a, 160b can perform the functions of preventing leakage of the liquid electrodes between the frame 110 and the first/second current collectors 130a, 130b, and electrically insulating the first/second current collectors 130a, 130b from the liquid electrodes located in the inter-electrode communication part 112, in addition to adhesively binding the first/second current collectors 130a, 130b to the frame 110.

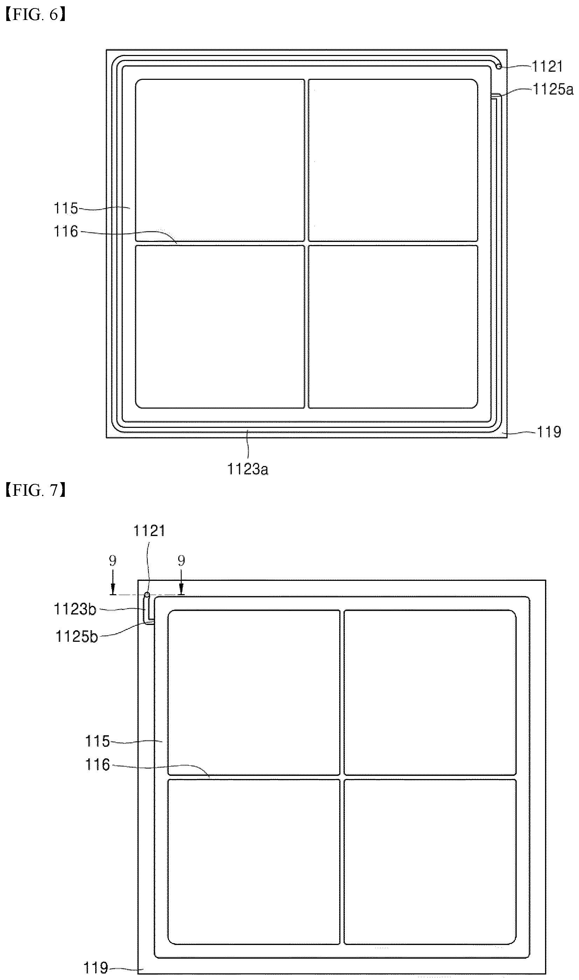

Detailed description about the inter-electrode communication part 112 will be made later, referring to FIGS. 6 through 9.

The separator 120 may be disposed inside the frame 110 to separate the first liquid electrode and the second liquid electrode from each other, and may allow hydrogen cations (protons) to move between the first liquid electrode and the second liquid electrode. The separator 120 may be disposed at the center of the frame 110 along the thickness direction of the frame 110 inside the frame 110 to separate the first electrode reservoir 111a and the second electrode reservoir 111b.

The separator 120 may be disposed between the first liquid electrode and the second liquid electrode. The separator 120 may be disposed between the first current collector 130a and the second current collector 130b. The separator 120 may be disposed more inside the frame 110 rather than the first adhesive member 160a or the second adhesive member 160b in an in-plane direction. An outer peripheral portion of the separator 120 may be bonded to the frame 110.

When discharging, hydrogen cations pass through the separator 120 and move from the first liquid electrode to the second liquid electrode. When charging, they pass through the separator 120 and move from the second liquid electrode to the first liquid electrode.

The separator 120 may include perfluorinated ionomer, partially fluorinated polymer, and non-fluorinated hydrocarbons. The separator 120 may be formed of or include Nafion^{®}, Flemion^{®}, NEOSEPTA-F^{®}, or Gore Select^{®}.

The separator 120 must prevent the first liquid electrode and the second liquid electrode from mixing with each other, but when charging or discharging, the vanadium ions and water contained in the first liquid electrode and the second liquid electrode might penetrate the separator, which means that 'crossover phenomenon' might occur. Accordingly, an imbalance occurs in the amount of the first liquid electrode and the amount of the second liquid electrode, which affects the performance and lifespan of the secondary battery. If a liquid electrode tank and a pump are provided like in the conventional redox secondary battery, this imbalance of the liquid electrodes could be resolved. However, since a small amount of liquid electrode exists only inside the secondary battery as in the present disclosure, even small imbalance might affect the performance and lifespan of the secondary battery a lot. The inter-electrode communication part 112 may be configured to resolve the imbalance caused by this crossover, and may allow the first liquid electrode or second liquid electrode with an increased volume to move toward the first liquid electrode or second liquid electrode with a reduced volume through the inter-electrode communication part. In other words, this inter-electrode communication part 112 works as a buffer space to absorb imbalance of the volumes of the first and second liquid electrodes.

The first current collector 130a may be disposed in one side of the frame 110 to form the first electrode reservoir 111a together with the frame 110 and the separator 120. The first current collector 130a may be in parallel and spaced apart from the second current collector 130b. The first current collector 130a may be adhered to the first adhesive member 160a adhered to the frame 110. The first current collector 130a may be bonded to the frame 110 by the first adhesive member 160a. The first adhesive member 160a may be applied or adhered to an outer peripheral portion of the first current collector 130a and/or an outer peripheral portion of the frame 110 to adhere the two together.

Since it has the first adhesive member 160a adhered thereto, the first current collector 130a may not directly contact the first liquid electrode or the second liquid electrode flowing in the inter-electrode communication part 112. The first current collector 130a may be electrically connected to the first liquid electrode and electrons may move so that current can flow when charging and discharging.

As shown in FIG. 4, when the plurality of secondary batteries form a module with the plurality of frames 110, the plurality of first current collectors 130a and the plurality of second current collectors 130b, the plurality of first current collectors 130a may be electrically connected by a bus bar (not shown) to connect the plurality of secondary batteries in parallel or series.

The first current collector 130a may include a first metal current collector 131a made of metal and electrically connected with the bus bar; a first carbon current collector 132a disposed between the first metal current collector 131a and the frame 110.

The first carbon current collector 132a may be made of a material such as graphite, carbon and carbon plastic, and may have high electrical conductivity and high acid resistance. The first carbon current collector 132a may be disposed between the first liquid electrode and the first metal current collector 131a to allow electrons to move between them, but to prevent the first metal current collector 131a from being oxidized. The first carbon current collector 132a may be formed in a rectangular plate shape or may be formed by applying the first metal current collector 131a.

The first carbon current collector 132a may be formed so that its outer peripheral portions (e.g. outer boundaries) can match the outer peripheral portions (e.g. outer boundaries) of the frame 110. The first carbon current collector 132a may be bonded to the frame 110 by the first adhesive member 160a. The first carbon current collector 132a may have the first adhesive member 160a adhered or applied to its outer peripheral portions.

The first metal current collector 131a may be made of a metal with high electrical conductivity, for example, copper or aluminum. The first metal current collector 131a may be formed in a rectangular plate shape, and a part thereof may protrude to be connected to the bus bar.

The first metal current collector 131a may be formed of a flexible thin film or rigid plate. As shown in FIG. 4. When the plurality of secondary batteries form the module, the plurality of first metal current collector 131a may be formed of a flexible thin film, with some part formed of a rigid plate.

The first carbon current collector 132a may be disposed on one surface of the first metal current collector 131a. When the plurality of secondary batteries form the module as shown in FIG. 4, the first carbon current collector 132a may be disposed on each of the two sides of the first metal current collector 131a.

The second current collector 130b may be disposed on the other side of the frame 110 to form the second electrode reservoir 111b together with the frame 110 and the separator 120. The second current collector 130b may be in parallel and spaced apart from the first current collector 130a. The second current collector 130b may be adhered to the second adhesive member 160b adhered to the frame 110. The second current collector 130b may be bonded to the frame 110 by the second adhesive member 160b. The second adhesive member 160b may be applied or adhered to the outer peripheral portion of the second current collector 130b and/or the outer peripheral portion of the frame 110 to adhere the two together.

Since it has the second adhesive member 160b adhered thereto, the second current collector 130b may not directly contact the first liquid electrode or the second liquid electrode flowing in the inter-electrode communication part 112. The second current collector 130b may be electrically connected to the second liquid electrode and electrons may move so that current can flow when charging and discharging.

As shown in FIG. 4, when the plurality of secondary batteries form a module with the plurality of frames 110, the plurality of first current collectors 130a and the plurality of second current collectors 130b, the plurality of second current collectors 130b may be electrically connected by the bus bar (not shown) to connect the plurality of secondary batteries in parallel.

The second current collector 130b may include a second metal current collector 131b made of metal and electrically connected with the bus bar; a second carbon current collector 132b disposed between the second metal current collector 131b and the frame 110.

The second carbon current collector 132b may be made of a material such as graphite, carbon and carbon plastic, and may have high electrical conductivity and high acid resistance. The second carbon current collector 132b may be disposed between the second liquid electrode and the second metal current collector 131b to allow electrons to move between them, but to prevent the second metal current collector 131b from being oxidized. The second carbon current collector 132b may be formed in a rectangular plate shape or may be formed by applying the second metal current collector 131b.

The second carbon current collector 132b may be formed so that its outer peripheral portions (e.g. outer boundaries) can match the outer peripheral portions (e.g. outer boundaries) of the frame 110. The second carbon current collector 132b may be bonded to the frame 110 by the second adhesive member 160b. The second carbon current collector 132b may have the second adhesive member 160b adhered or applied to its outer peripheral portions.

The second metal current collector 131b may be made of a metal with high electrical conductivity, for example, copper or aluminum. The second metal current collector 131b may be formed in a rectangular plate shape, and a part thereof may protrude to be connected to the bus bar.

The second metal current collector 131b may be formed of a flexible thin film or rigid plate. As shown in FIG. 4. When the plurality of secondary batteries form the module, the plurality of second metal current collector 131b may be formed of a flexible thin film, with some part formed of a rigid plate.

The second carbon current collector 132b may be disposed on one surface of the second metal current collector 131b. When the plurality of secondary batteries form the module as shown in FIG. 4, the first carbon current collector 132b may be disposed on each of the two sides of the second metal current collector 131b.

The first solid electrode 150a may be impregnated with the first liquid electrode and disposed in the first electrode reservoir 111a. The first solid electrode 150a may be surrounded by the frame 110, the first current collector 130a and the separator 120. The first solid electrode 150a may include carbon-based materials such as carbon or graphite felt, carbon cloth, carbon black, graphite powder, or graphene. The first solid electrode 150a may be disposed more inside the frame 110 in an in-plane direction rather than the first adhesive member 160a.

The first solid electrode 150a may be formed in a porous hexahedron shape. The first solid electrode 150a may have a thickness greater than the thickness of the first electrode reservoir 111a. In this case, the first solid electrode 150a may be accommodated by being pressed into the first electrode reservoir 111a. The first solid electrode 150a may be in close contact with the first current collector 130a and the separator 120.

The second solid electrode 150b may be impregnated with the second liquid electrode and disposed in the second electrode reservoir 111b. The second solid electrode 150b may be surrounded by the frame 110, the second current collector 130b and the separator 120. The second solid electrode 150b may include carbon-based materials such as carbon or graphite felt, carbon cloth, carbon black, graphite powder, or graphene. The second solid electrode 150b may be disposed more inside the frame 110 in an in-plane direction rather than the second adhesive member 160b.

The second solid electrode 150b may be formed in a porous hexahedron shape. The second solid electrode 150b may have a thickness greater than the thickness of the second electrode reservoir 111b. In this case, the second solid electrode 150b may be accommodated by being pressed into the second electrode reservoir 111b. The second solid electrode 150b may be in close contact with the second current collector 130b and the separator 120.

Each of the first adhesive member 160a and the second adhesive member 160b may include at least one of an acrylate-based adhesive, an acrylate-ester-based adhesive, an acrylate-ethylene-based adhesive, a polycarbonate-based adhesive, a polyethylene-based adhesive, and an epoxy-based adhesive and an isocyanate-based adhesive. Each of the first adhesive member 160a and the second adhesive member 160b is one or a combination of a solvent type adhesive, an emulsion type adhesive, a hot melt type adhesive, a liquid curing type adhesive and a film type adhesive.

Each of the first adhesive member 160a and the second adhesive member 160b may have a strip shape. Each of the first adhesive member 160a and the second adhesive member 160b may have a hollow square shape. Each of the first adhesive member 160a and the second adhesive member 160b may be formed like a closed curve. That is, the first and second adhesive members 160a, 160b may have a loop shape. The outer peripheral portions (e.g. outer boundaries) of each of the first adhesive member 160a and the second adhesive member 160b are formed to match the outer peripheral portions (e.g. outer boundaries) of the frame 110. More specifically, the edges of each of the first adhesive member 160a and the second adhesive member 160b are in line with the edges of the frame 110 in the out-of-plane direction.

The first adhesive member 160a may bind the first carbon current collector 132a of the first current collector 130a to the frame 110. The first adhesive member 160a may seal between the first carbon current collector 132a of the first current collector 130a and the frame 110. The first adhesive member 160a may be layered between the first carbon current collector 132a of the first current collector 130a and the frame. The first adhesive member 160a may be adhered to one in-plane directional side of the frame 110. The first adhesive member 160a may be adhered to an outer peripheral portion of one surface of the first carbon current collector 132a on which the first metal current collector 131a is not disposed. The first adhesive member 160a may be applied on the first carbon current collector 132a to be adhesive to the frame 110.

The first adhesive member 160a may be disposed so that the outer peripheral portions (e.g. outer boundaries) of the first carbon current collector 132a of the first current collector 130a can match the outer peripheral portions (e.g. outer boundaries) of the frame 110. More specifically, the edge of the first carbon current collector 132a may be in line with the edge of the frame 110 in the out-of-plane direction. The first adhesive member 160a may be disposed outside the separator 120 in the frame 110 in the in-plane direction.

The first adhesive member 160a may form some part of the inter-electrode communication part 112 together with the frame 110. The first adhesive member 160a may cover some part of the inter-electrode communication part 112. The first adhesive member 160a may cover a part of the inter-electrode communication part 112 that is formed as a groove extending in an in-plane direction on an end surface of the frame 110. The first adhesive member 160a may cover a part of the inter-electrode communication part 112 that is formed as a hole of the frame 110 extending in an out-of-plane direction.

At least part of the first adhesive member 160a may be disposed more outside rather than the inter-electrode communication part 112 in an in-plane direction from the center of the frame 110. Here, the center of the frame 100 refers to the center viewed when the largest surface of the frame 110 is put on a plane, as illustrated in Figs. 5 to 8. The first liquid electrode or second liquid electrode flowing in the inter-electrode communication part 112 may contact the first adhesive member 160a. The first adhesive member 160a may be adhered to the frame 110 and the first current collector 130a so that the first liquid electrode or second liquid electrode flowing in the inter-electrode communication part 112 may not contact the first current collector 130a.

The first adhesive member 160a may be disposed in the space where the first solid electrode 150a and second solid electrode 150b are not disposed among the spaces defined by the frame 110, wherein the spaces include the first electrode reservoir 111a, the second electrode reservoir 111b and the inter-electrode communication part 112.

The second adhesive member 160b may bind the second carbon current collector 132b of the second current collector 130b to the frame 110. The second adhesive member 160b may seal between the second carbon current collector 132b of the second current collector 130b and the frame 110. The second adhesive member 160b may be layered between the second carbon current collector 132b of the second current collector 130b and the frame 110. The second adhesive member 160b may be adhered to the other out-of-plane directional side of the frame 110. The second adhesive member 160b may be adhered to the circumferential portion of one of the two major surfaces of the second carbon current collector 132b, where the second metal current collector 131b is not disposed. Here, the two major surfaces of the second carbon current collector 132b are also referred to as the two out-of-plane directional surfaces of the second carbon current collector 132b. The second adhesive member 160b may be applied to the second current collector 132b to be adhered to the frame 110.

The second adhesive member 160b may be disposed to allow the outer peripheral portions (e.g. outer boundaries) of the second carbon current collector 132b of the second current collector 130b to match the outer peripheral portions (e.g. outer boundaries) of the frame 110. Further specifically, the edges of the second carbon current collector 132b may be in line with the edges of the frame 110 in the out-of-plane direction. The second adhesive member 160b may be disposed more outside rather than the second solid electrode 150b in an in-plane direction from the center of the frame 110. The second adhesive member 160b may be disposed more outside rather than the second reservoir 111b in the in-plane direction from the center of the frame 110. The second adhesive member 160b may be disposed more outside rather than the separator 120 in the in-plane direction from the center of the frame 110. As explained above, the center of the frame 100 refers to the center viewed when the largest surface of the frame 110 is put on a plane, as illustrated in Figs. 5 to 8.

The second adhesive member 160b may form some part of the frame 110 and some part of the inter-electrode communication part 112. The second adhesive member 160b may cover some part of the inter-electrode communication part 112. The second adhesive member 1160b may cover the part of the inter-electrode communication part 112 formed as the groove extending in the in-plane direction on the outer peripheral portion of the frame 110. The second adhesive member 160b may cover the part of the inter-electrode communication part 112 formed as the hole extending in the out-of-plane direction of the frame 110.

At least part of the second adhesive member 160b may be disposed more outside rather than the inter-electrode communication part 112 in an in-plane direction from the center of the frame 110. The first liquid electrode or second liquid electrode flowing in the inter-electrode communication part 112 may contact with the second adhesive member 160b. The second adhesive member 160b may be adhered to the frame 110 and the second current collector 130b so that the first liquid electrode or second liquid electrode flowing in the inter-electrode communication part 112 may not contact the second current collector 130b.

The second adhesive member 160b may be disposed in the space among the spaces formed by the frame 110 (i.e., the first electrode reservoir 111a, the second electrode reservoir 111b and the inter-electrode communication part 112), where the first solid electrode 150a and second solid electrode 150b are not disposed.

The first adhesive member 160a and the second adhesive member 160b may cover both ends of the hole part in the inter-electrode communication part 112, respectively. One end of the hole in the inter-electrode communication part 112 may be blocked by the first adhesive member 160a and the other end of the hole in the inter-electrode communication part 112 may be blocked by the second adhesive member 160b. The liquid electrode flowing in the groove of the inter-electrode communication part 112 may be prevented from directly contacting the first carbon current collector 132a of the first current collector 130a by the first adhesive member 160a and from directly contacting the second carbon current collector 132b of the second current collector 130b by the second adhesive member 160b.

The entire structure of the secondary battery having the above-noted configurations according to the present disclosure will be described as follows.

The separator 120 having a predetermined thickness may be bonded to a center portion of the rectangular frame 110 in the thickness direction of the frame 110. The first current collector 130a may be bonded to one out-of-plane directional side (i.e. a side of the frame 110, the inner edge of which is exposed to the first electrode reservoir 111a) of the frame 110 by the first adhesive member 160a, and the second current collector 130b may be bonded to the other out-of-plane directional side (i.e. another side of the frame 110, the inner edge of which is exposed to the second electrode reservoir 111b) of the frame by the second adhesive member 160b. The first and second current collectors 130a, 130b are arranged to form the first electrode reservoir 111a and the second electrode reservoir 111b respectively. That is, the frame 110 may be disposed between the first current collector 130a and the second current collector 130b, and the separator 120 may be disposed in the frame 110.

The first solid electrode 150a impregnated with the first liquid electrode may be disposed in the first electrode reservoir 111a, and the second solid electrode 150b impregnated with the second liquid electrode may be disposed in the second electrode reservoir 111b.

The first adhesive member 160a or the second adhesive member 160b may be adhered to the outer peripheral portions of the frame 110 and also adhered to the outer peripheral portion of the first carbon current collector 132a or the second carbon current collector 132b. The first adhesive member 160a, the second adhesive member 160b, the frame 110, the first carbon current collector 132a and the second carbon current collector 132b may be disposed to allow the outer peripheral portions (e.g. outer boundaries) thereof to match each other. Further specifically, the edges of the first adhesive member 160a, the second adhesive member 160b, the frame 110, the first carbon current collector 132a and the second carbon current collector 132b may be in line in the out-of-plane direction. Accordingly, when they are bonded to each other, the shape becomes a rectangular parallelepiped shape.

The first adhesive member 160a or second adhesive member 160b together with the frame 110 may form the inter-electrode communication part 112. The first adhesive member 160a, the first carbon current collector 132a and the first metal current collector 131a may be sequentially disposed upon the inter-electrode communication part 112 of the first electrode reservoir 111a. The second adhesive member 160b, the second carbon current collector 132b and the second metal current collector 131b may be sequentially disposed upon the inter-electrode communication part 112 of the second electrode reservoir 111b.

When charging, the first liquid electrode and/or second liquid electrode may flow in the inter-electrode communication part 112, but may be prevented from directly contacting the first current collector 130a or second current collector 130b by the first adhesive member 160a or second adhesive member 160b.

Referring to FIG. 4, batteries having the above-described configuration are stacked repeatedly to form a module. That is, the first current collector 130a may be disposed between two adjacent frames 110, and the second current collector 130b may be disposed between two adjacent frames 110. In this case, only one first metal current collector 131a may be disposed between two first carbon current collectors 132a, and only one metal current collector 131b may be disposed between two second carbon current collector 132b.

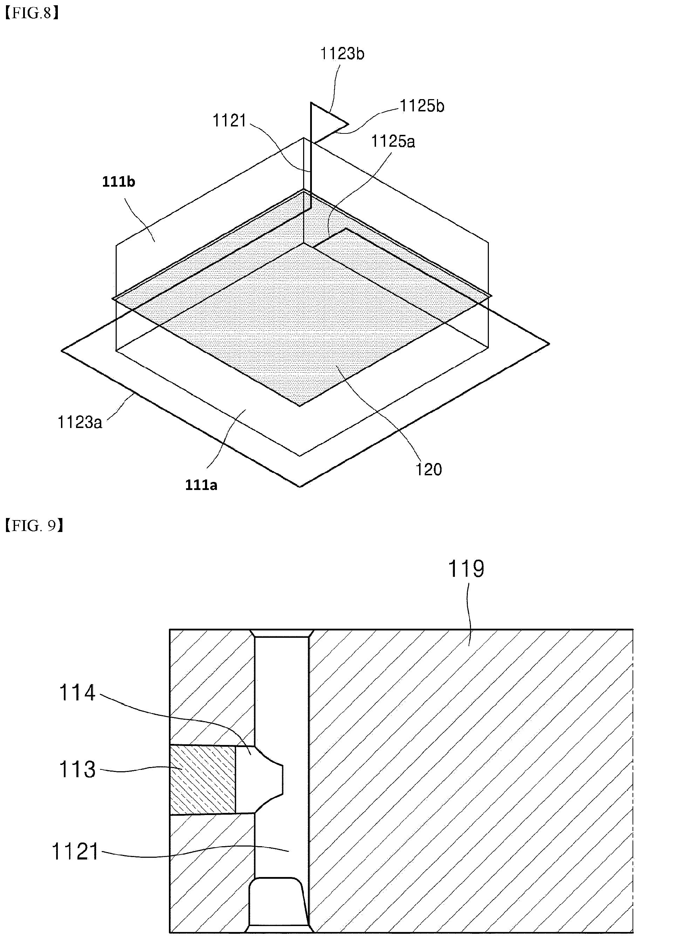

FIG. 5 is a plane view of a battery according to an embodiment. FIG. 6 is a front view of a frame according to an embodiment. FIG. 7 is a rear view of a frame according to an embodiment. FIG. 8 is a view showing flow of liquid electrode through an inter-electrode communication part of a battery according to an embodiment. FIG. 9 is a cross sectional view of the frame shown in FIG. 7 along a 9-9 direction.

The frame 110 according to an embodiment of the present disclosure may include a frame body 119 having a hollow square shape; a separator supporter 115 protruding inward from the frame body 119 toward the hollow to be bonded to the separator 120; and a frame reinforcing portion 116 disposed in the hollow of the frame body 119 to prevent deformation of the frame body 119.

The frame body 119 may be formed in the hollow square shape with four side portions ("bar portions") of a bar shape. The hollow of the frame body 119 may form the first electrode reservoir 111a and the second electrode reservoir 111b. The separator supporter 115 protruding in the in-plane direction may be formed in the hollow of the frame body 119. The inter-electrode communication part 112 may be formed in the frame body 119.

The frame body 119 may have one out-of-plane directional side to which the first adhesive member 160a is adhered and the other out-of-plane directional side to which the second adhesive member 160b is adhered. More specifically, the frame body 119 may have one end surface to which the first adhesive member 160a is adhered and the other end surface to which the second adhesive member 160b is adhered, wherein the two end surfaces are opposite to each other in an out-of-plane direction. The out-of-plane directional side of the frame body 119 may be bonded to the first current collector 130a by the first adhesive member 160a, and the other out-of-plane directional side thereof may be bonded to the second current collector 130b by the second adhesive member 160b.

The separator supporter 115 may protrude toward the center in the in-plane direction from the hollow of the frame body 119, and may be formed in a square shape. Referring to FIG. 3, the separator supporter 115 may be disposed at the center of the frame body 119 in the thickness direction.

The outer peripheral portions of the separator 120 may be bonded to the separator supporter 115 so that the separator can be stretched tightly. It is preferred that the separator supporter 115 has a minimum width capable of supporting the separator 120. The separator supporter 115 may serve as a rib for reinforcing the in-plane direction of the frame body 119, to prevent the frame body 119 from being deformed in the in-plane direction even when expansion or contraction of the first or second liquid electrode, gas generation within the liquid electrode or external shock occurs.

One lateral surface of the separator supporter 115 may be bonded to the separator 120 in close contact, to prevent the first liquid electrode or second liquid electrode from leaking between the separator supporter 115 and the separator 120. An adhesive including the same component as the material of the first adhesive member 160a or second adhesive member 160b may be disposed between the between the separator supporter 115 and the separator 120. The separator supporter 115 and the separator 120 may be bonded by an adhesive including at least one of an n acrylate-based adhesive, an acrylate-ester adhesive, an acrylate-ethylene-based adhesive, a polycarbonate-based adhesive, a polyethylene-based adhesive, an epoxy-based adhesive, and an isocyanate-based adhesive.

The separator supporter 115 may be disposed inside the first adhesive member 160a or second adhesive member 160b in the in-plane direction.

The frame reinforcing portion 116 may be formed to connect one side of the frame body 119 to another side or to connect one vertex to another vertex. The frame reinforcing portion 116 of this embodiment may be formed in a + shape connecting two opposite sides of the frame body 119.

The frame reinforcing portion 116 may be disposed inside the first adhesive member 160a or second adhesive member 160b in the in-plane direction.

Referring to FIG. 5, the first adhesive member 160a or second adhesive member 160b may not be adhered to the separator supporter 115. The first adhesive member 160a may be adhered to the out-of-plane directional side of the frame body 119, and the second adhesive member 160b may be adhered to the other out-of-plane directional side of the frame body 119. The first adhesive member 160a may cover the part of the inter-electrode communication part 112 formed on the out-of-plane directional side of the frame body 119, and the second adhesive member 160b may cover the part of the inter-electrode communication part 112 formed on the other out-of-plane directional side of the frame body 119.

To resolve the imbalance between the amount of the first liquid electrode and the amount of the second liquid electrode due to crossover that might occur when charging or discharging, the inter-electrode communication part 112 is configured to be in fluidic communication with the first electrode reservoir 111a and the second electrode reservoir 111b so that the first liquid electrode or second liquid electrode can flow inside the inter-electrode communication part, when charging or discharging.

The inter-electrode communication part 112 may be formed thin and long to have a resistance value above a predetermined level while having a volume allowing flow of as much as half the difference between the amount of the first liquid electrode and the amount of the second liquid electrode due to the crossover.

The inter-electrode communication part 112 may be formed in a part of the frame body 119 surrounding the first solid electrode 150a or second solid electrode 150b to be disposed in a part of the circumference of the first solid electrode 150a or second solid electrode 150b.

The inter-electrode communication part 112 may be disposed more outside rather than the separator supporter 115 in an in-plane direction from the center of the frame 110. The inter-electrode communication part 112 may be disposed more inside rather than the first adhesive member 160a and/or second adhesive member 160b in the in-plane direction. The inter-electrode communication part 112 may be covered by the first adhesive member 160a and/or second adhesive member 160b.

Referring to FIGS. 5 and 6, the inter-electrode communication part 112 may include an inter-electrode hole 1121 formed as a hole in the frame in the out-of-plane direction; a first inter-electrode line 1123a through which the inter-electrode hole 1121 and the first electrode reservoir 111a are in fluidic communication with each other; and a second inter-electrode line 1123b through which the inter-electrode hole 112 and the second electrode reservoir 111b are in fluidic communication with each other.

The inter-electrode hole 1121 may be formed in the frame 110 as a hole extending in an out-of-plane direction. The inter-electrode hole 1121 may extend in a direction penetrating the plane formed by the separator 120. The inter-electrode hole 1121 may be perpendicular to the plane formed by the separator 120. The inter-electrode hole 1121 may be perpendicular to the first inter-electrode line 1123a. The inter-electrode hole 1121 may be perpendicular to the second inter-electrode line 1123b. The inter-electrode hole 1121 extending in the out-of-plane direction may be bent in an in-plane direction at one end to be connected to the first inter-electrode line 1123a, and bent in another in-plane direction at the other end to be connected with the second inter-electrode line 1123b. The inter-electrode hole 1121 may connect the first inter-electrode line 1123a and the second inter-electrode line 1123b with each other.

The inter-electrode hole 1121 may be formed at a region near one corner of the square-shaped frame body 119. One end of the inter-electrode hole 1121 may be covered by the first adhesive member 160a and the other end thereof may be covered by the second adhesive member 160b. A center portion of the inter-electrode hole 1121 along an out-of-plane direction (i.e along a thickness direction of the frame 110) may be connected with an injection hole 114, which will be described later.

Referring to FIG. 6, the first inter-electrode line 1123a may be formed in one out-of-plane directional side of the frame body 119 as a groove. The first inter-electrode line 1123a may be formed along the frame body 119. The first inter-electrode line 1123a may be bent at least twice. The first inter-electrode line 1123a may be bent four times from the inter-electrode hole 1121 along the shape of the frame body 119 to form a substantial square shape, and may be then connected to the first electrode reservoir 111a, to be connected with the first electrode reservoir 111a. The first inter-electrode line 1123a may be formed on all four bar portions of the frame body 119. The first inter-electrode line 1123a may have a first transition drain 1125a that is open to be connected with the first electrode reservoir 111a. The first inter-electrode line 1123a may be covered by the first adhesive member 160a.

Referring to FIG. 7, the second inter-electrode line 1123b may be formed as a groove formed on the other out-of-plane directional side of the frame body 119. The second inter-electrode line 1123b may be formed along the frame body 119. The second inter-electrode line 1123b may be formed from the inter-electrode hole 1121 in a straight line along one of the bar portions of the frame body 119 and may be then connected to the second electrode reservoir 111b. The second inter-electrode line 1123b may have a second transition drain 1125b that is open to be connected with the second electrode reservoir 111b. The second inter-electrode line 1123b may be covered by the second adhesive member 160b.

The second inter-electrode line 1123b may be formed not to overlap the first inter-electrode line 1123a, when projected in the out-of-plane direction on a same plane. as the first inter-electrode line 1123a and the second inter-electrode line 1123b may form a closed curve when projected in the out-of-plane direction on the same plane. When projected in the out-of-plane direction on the same plane, the first inter-electrode line 1123a and the second inter-electrode line 1123b may form a square shape. That is, the first inter-electrode line 1123a and the second inter-electrode line 1123b may be formed throughout around the four bar portions of the frame body 119.

The second transition drain 1125b may be formed to overlap the first transition drain 1125a when projected in the out-of-plane direction. The first transition drain 1125a and the second transition drain 1125b may be formed in the same direction, in parallel.

The first adhesive member 160a may cover the first inter-electrode line 1123a and the second adhesive member 160b may cover the second inter-electrode line 1123b. The first adhesive member 160a may cover one end of the inter-electrode hole 1121, and the second adhesive member 160b may cover the other end of the inter-electrode hole 1121.

Referring to FIG. 9, the secondary battery according to an embodiment of the present disclosure may further include an injection hole 114 formed in the frame 110 so that the first liquid electrode or second liquid electrode may be injected through the injection hole 114.

The injection hole 114 may be formed in the frame 110 so that the liquid electrode may be injected from the outside through the injection hole 114 and then introduced into the first electrode reservoir 111a and the second electrode reservoir 111b. The injection hole 114 may have one end that is open to the outside in the frame 110. One end of the injection hole 114 may be in line with an outer circumferential flat (end) surface 1191 of the frame 110, which is exposed outside when the battery is stacked with other batteries. In other words, the injection hole 114 may be formed not to be surrounded by a portion of the frame 110 protruding the outer circumferential flat surface 1191 of the frame 110. When the frame 110 itself is manufactured before it is assembled with other components, the frame 110 does not have such protruding portion in which the injection hole 114 is disposed. This is distinguishing from removing a protruding portion surrounding the injection hole 114 after injecting a liquid electrode through the injection hole 114. The later removal of the protruding portion would have to leave at least a residual of the protruding portion, such that the one end of the injection hole 114 cannot be in line with the flat surface of the frame 110, and/or the injection hole 114 is surrounded by the residual of the protruding portion. This injection hole 114 may be formed together with a frame body by molding. Since there is no protruding portion of the frame 110 from the beginning of the manufacturing and assembling process, a space for storing a battery and a battery module comprising stacked batteries can be saved and the manufacturing and assembling process for the battery and the battery module can be easier. The injection hole 114 may be formed to inject the first liquid electrode into the first electrode reservoir 111a and the second liquid electrode into the second electrode reservoir 111b. When the liquid electrode is injected from the outside through the injection hole 114, the liquid electrode may be accommodated in the first electrode reservoir 111a and the second electrode reservoir 111b. The liquid electrode injected into the first electrode reservoir 111a through the injection hole 114 may become the first liquid electrode, and the liquid electrode injected into the second electrode reservoir through the injection hole 114 may become the second liquid electrode.

The injection hole 114 may be the hole formed in the in-plane direction of the frame 110. The injection hole 114 may be formed at one end of one bar portion of the frame body 119. The injection hole 114 may be formed at a region near one corner of the square-shaped frame body 119. The injection hole 114 may extend from an in-plane directional side of the frame body 119 inwards of the frame body 119.

The injection hole 114 may boe disposed on the same plane as the separator 120. The injection hole 114 may be disposed at a boundary region between the first electrode reservoir 111a and the second electrode reservoir 111b in an out-of-plane direction. The injection hole 114 may be disposed between the first adhesive member 160a and the second adhesive member 160b in an out-of-plane direction.

A depth of the injection hole 114 may be longer than a hydraulic diameter of the injection hole 114.

It is preferable that the injection port 114 is connected at a right angle to the inter-electrode hole 1121 of the inter-electrode communication part 112 and thereby forms a T shape together with the inter-electrode hole 1121. The injection hole 114 may be branched to the inter-electrode communication part 112 to be connected with the first electrode reservoir 111a and the second electrode reservoir 111b. The injection hole 114 may be connected with the center of the inter-electrode hole 1121 in the thickness direction of the frame 110. A hydraulic diameter of the injection port 114 at any one point is larger than the maximum hydraulic diameter of the inter-electrode communication part 112. The hydraulic diameter of the injection port 114 decreases from one end to the other end connected to the inter-electrode hole 1121 of the inter-electrode communication part 112. The injection hole 114 may be disposed between the first inter-electrode line 1123a and the second inter-electrode line 1123b along an out-of-plane direction. The injection hole 114 may be formed such that as thethe injection hole 114 and at least one of the first transition drain 1125a and the second transition drain 1125b head a same direction when the first transition drain 1125a and the second transition drain 1125b are projected on the same plane where the injection hole 114 is positioned. Alternati25njection injection hole 114 may be arranged to be perpendicular to the first transition drain 1125a or the second transition drain 1125b when the drains 1125a, 1125b are projected on the same plane where the injection hole 114 is positioned.

The injection hole 114 may be closed after the liquid electrode is injected into the first electrode reservoir 111a and the second electrode reservoir 111b in an amount that undergoes the first half reaction and the second half reaction.

The secondary battery according to an embodiment of the present invention may include a sealing member 113 that blocks the injection hole 114.

At least part of the sealing member 113 may be inserted into the injection hole 114. In the embodiment, the sealing member 113 may have a rod shape and may be press-fitted into the injection hole 114 to block the injection hole 114. The sealing member 113 may include at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive. The sealing member 113 is one of solvent type, emulsion type, hot melt type, and liquid curing type adhesive/adhesive and can be injected into the injection hole 114 to seal the injection hole 114. The hydraulic diameter of the injection port 114 becomes smaller from one end blocked by the sealing member 113 to the other end.

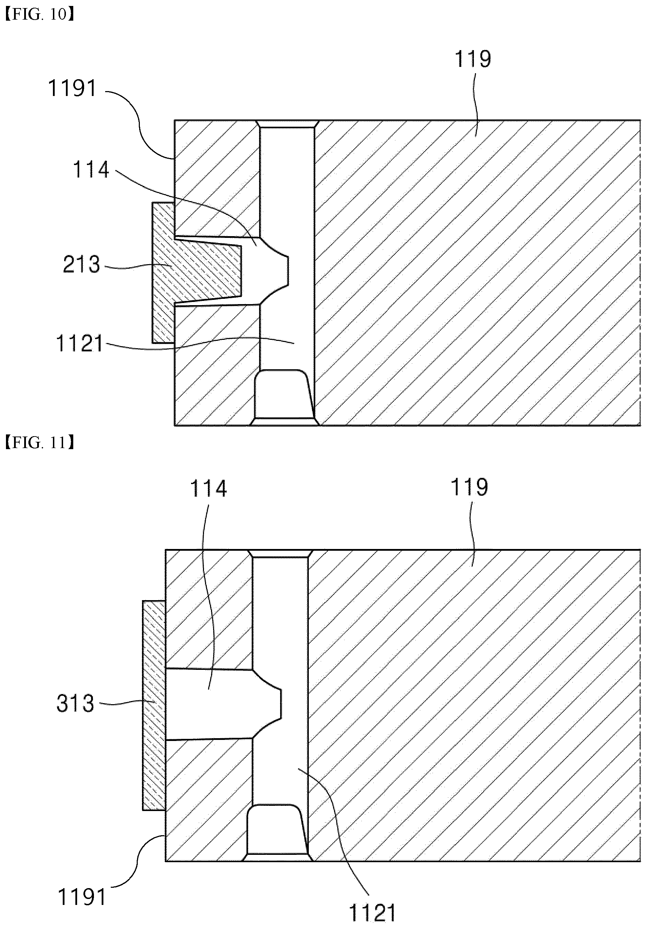

FIG. 10 is a cross sectional view partially showing a battery according to another embodiment.

In the embodiment, some part of the sealing member 213 may be attached to the frame 110 to cover the injection hole 114, and the other part thereof may be inserted into the injection hole 114. The sealing member 213 may be adhered to the frame 110 by at least one of an acrylate adhesive, an acrylate-ester adhesive, an acrylate-ethylene adhesive, a polycarbonate adhesive, a polyethylene adhesive, an epoxy adhesive, and an isocyanate adhesive.

FIG. 11 is a cross sectional view partially showing a battery according to a further embodiment.

In the present embodiment, the sealing member 313 may be formed of a film-type adhesive and is adhered to the frame 110. The sealing member 313 includes at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive.

The battery explained above may be manufactured by: forming the frame 110 having a first electrode reservoir 111a that is a space for storing a first liquid electrode, a second electrode reservoir 111b that is a space for storing a second liquid electrode, an inter-electrode communication part 112 configured to allow the first electrode reservoir 111a and the second electrode reservoir 111b to be in fluidic communication with each other in order to absorb imbalance of volumes of the first and second liquid electrodes, and an injection hole 114 being in fluidic communication with the first electrode reservoir 111a and the second electrode reservoir 111b; binding a separator to the frame which separates the first electrode reservoir 111a and the second electrode reservoir 111b; binding a first current collector 130a and a second current collector 130b to the frame 110 respectively by a first adhesive member 160a and a second adhesive member 160b in the manner of each current collector covering the first electrode reservoir 111a and the second electrode reservoir 111b; and injecting a liquid electrode, which constitutes the first liquid electrode and the second liquid electrode, through the injection hole 114.

The step of forming the frame may further comprise forming the injection hole to be in line with an outer circumferential flat surface 1191 of the frame 110.

The step of forming the frame may further comprise forming the injection hole 114 not to be surrounded by a portion of the frame 110 protruding from the outer circumferential flat surface 1191 of the frame 110.

The step of binding the first current collector 130a and the second current collector 130b to the frame 110 may comprise applying the first adhesive member 160a to at least one of the first current collector 130a or the frame 110 to adhere the first current collector 130a and the frame 110 together; and applying the second adhesive member 160b to at least one of the second current collector 130b or the frame 110 to adhere the second current collector 130b and the frame 110 together.

The method may further comprise closing the injection hole 114 with a sealing member after the injection step.

The embodiments are described above with reference to a number of illustrative embodiments thereof. ,

## Claims

1. A battery comprising:
a first current collector (130a);
a second current collector (130b) spaced apart from the first current collector (130a);
a separator (120) disposed between the first current collector (130a) and the second current collector (130b);
a frame (110) forming a first electrode reservoir (111a) between the first current collector (130a) and the separator (120), and a second electrode reservoir (111b) between the second current collector (130b) and the separator (120), wherein the first electrode reservoir (111a) and the second electrode reservoir (111b) contain a first liquid electrode and a second liquid electrode, respectively;
a first adhesive member (160a) adhesively binding the first current collector (130a) and the frame (110) to each other;
a second adhesive member (160b) adhesively binding the second current collector (130b) and the frame (110) to each other; and
**characterized by** an inter-electrode communication part (112) configured to allow the first electrode reservoir (111a) and the second electrode reservoir (111b) to be in fluidic communication with each other,
wherein at least part of the inter-electrode communication part (112) is formed between the first adhesive member (160a) and the frame (110) and/or between the second adhesive member (160b) and the frame (110).

2. The battery of claim 1, wherein the first adhesive member (160a) seals between the first current collector (130a) and the frame (110), and
the second adhesive member (160b) seals between the second current collector (130b) and the frame (110).

3. The battery of claim 1 or 2, wherein the first adhesive member (160a) is layered between the first current collector (130a) and the frame (110), and
the second adhesive member (160b) is layered between the second current collector (130b) and the frame (110).

4. The battery of any one of claims 1 to 3, wherein each of the first adhesive member (160a) and the second adhesive member (160b) comprises at least one of an acrylate adhesive, an acrylate-ester-based adhesive, an acrylate-ethylene-based adhesive, a polycarbonate-based adhesive, a polyethylene adhesive, an epoxy adhesive and an isocyanate adhesive.

5. The battery of any one of claims 1 to 3, wherein each of the first adhesive member (160a) and the second adhesive member (160b) is one or a combination of a solvent-type adhesive, an emulsion-type adhesive, a hot-melt-type adhesive, a liquid-curing adhesive and a film-type adhesive.

6. The battery of any one of claims 1 to 5, wherein each of the first adhesive member (160a) and the second adhesive member (160b) has a loop shape.

7. The battery of any one of claims 1 to 5, wherein the frame (110) is formed in a hollow square shape, and
each of the first adhesive member (160a) and the second adhesive member (160b) has outer peripheral portions matching outer peripheral portions of the frame (110).

8. The battery of any one of claims 1 to 7, wherein the first adhesive member (160a) is adhered to one out-of-plane directional side of the frame (110), and
the second adhesive member (160b) is adhered to the other out-of-plane directional side of the frame (110).

9. The battery of any one of claims 1 to 8, wherein the frame (110) comprises,
a frame body (119) having a hollow space therein; and
a separator supporter (115) protruding inward from the frame body (119) toward the hollow space and supporting the separator (120), and
the first adhesive member (160a) adhered to one out-of-plane directional side of the frame body (119), and the second adhesive member (160b) adhered to the other out-of-plane directional side of the frame body (119).

10. The battery of any one of claim 1 to 9, wherein the frame (110) comprises,
a frame body (119) having a hollow space therein; and
a separator supporter (115) protruding inward from the frame body (119) toward the hollow space and supporting the separator (120), and
each of the first adhesive member (160a) and the second adhesive member (160b) is disposed more outside rather than the separator supporter (115) in an in-plane direction from the center of the frame (110).

11. The battery of any one of claims 1 to 10, further comprising:
a first solid electrode (150a) disposed in the first electrode reservoir (111a) and configured to be impregnated with the first liquid electrode; and
a second solid electrode (150b) disposed in the second electrode reservoir (111b) and configured to be impregnated with the second liquid electrode,
wherein the first adhesive member (160a) is disposed more outside than the first solid electrode (150a) in an in-plane direction from the center of the frame (110), and
the second adhesive member (160b) is disposed more outside rather than the second solid electrode (150b) in an in-plane direction from the center of the frame (110).

12. The battery of any one of claims 1 to 11, wherein each of the first adhesive member (160a) and the second adhesive member (160b) is disposed more outside rather than the separator (120) in an in-plane direction from the center of the frame (110).

13. The battery of any one of claims 1 to 12, wherein the inter-electrode communication part (112) is disposed between the first adhesive member (160a) and the second adhesive member (160b).

14. The battery of any one of claims 1 to 13, wherein the inter-electrode communication part (112) comprises,
an inter-electrode hole (1121) in the frame (110) which extends in the out-of-plane direction;
a first inter-electrode line (1123a) configured to allow the inter-electrode hole (1121) and the first electrode reservoir (111a) to be in fluidic communication with each other; and
a second inter-electrode line (1123b) configured to allow the inter-electrode hole (1121) and the second electrode reservoir (111b) to be in fluidic communication with each other, and
wherein the first adhesive member (160a) covers the first inter-electrode line (1123a), and the second adhesive member (160b) covers the second inter-electrode line (1123b).

15. The battery of any one of claims 1 to 13, wherein the first adhesive member (160a) is disposed more outside rather than the first electrode reservoir (111a) in an in-plane direction from the center of the frame (110), and
the second adhesive member (160b) is disposed more outside rather than the second electrode reservoir (111b) in an in-plane direction from the center of the frame (110).

## Patentansprüche

1. Batterie, aufweisend:
einen ersten Stromabnehmer (130a);
einen zweiten Stromabnehmer (130b), der von dem ersten Stromabnehmer (130a) beabstandet ist;
einen Separator (120), der zwischen dem ersten Stromabnehmer (130a) und dem zweiten Stromabnehmer (130b) angeordnet ist;
einen Rahmen (110), der ein erstes Elektrodenreservoir (111a) zwischen dem ersten Stromabnehmer (130a) und dem Separator (120) und ein zweites Elektrodenreservoir (111b) zwischen dem zweiten Stromabnehmer (130b) und dem Separator (120) ausbildet, wobei das erste Elektrodenreservoir (111a) und das zweite Elektrodenreservoir (111b) eine erste Flüssigelektrode beziehungsweise eine zweite Flüssigelektrode enthalten;
ein erstes Klebeelement (160a), das den ersten Stromabnehmer (130a) und den Rahmen (110) klebend aneinander bindet;
ein zweites Klebeelement (160b), das den zweiten Stromabnehmer (130b) und den Rahmen (110) klebend aneinander bindet; und
**gekennzeichnet durch** ein Zwischenelektrodenkommunikationsteil (112), das konfiguriert ist, um dem ersten Elektrodenreservoir (111a) und dem zweiten Elektrodenreservoir (111b) zu ermöglichen, in Fluidkommunikation miteinander zu stehen,
wobei mindestens ein Teil des Zwischenelektrodenkommunikationsteils (112) zwischen dem ersten Klebeelement (160a) und dem Rahmen (110) und/oder zwischen dem zweiten Klebeelement (160b) und dem Rahmen (110) ausgebildet ist.

2. Batterie nach Anspruch 1, wobei das erste Klebeelement (160a)zwischen dem ersten Stromabnehmer (130a) und dem Rahmen (110) abdichtet, und
das zweite Klebeelement (160b) zwischen dem zweiten Stromabnehmer (130b) und dem Rahmen (110) abdichtet.

3. Batterie nach Anspruch 1 oder 2, wobei das erste Klebeelement (160a) zwischen dem ersten Stromabnehmer (130a) und dem Rahmen (110) geschichtet ist, und
das zweite Klebeelement (160b) zwischen dem zweiten Stromabnehmer (130b) und dem Rahmen (110) geschichtet ist.

4. Batterie nach einem der Ansprüche 1 bis 3, wobei jedes von dem ersten Klebeelement (160a) und dem zweiten Klebeelement (160b) mindestens einen von einem Acrylatklebstoff, einem Klebstoff auf Acrylatesterbasis, einem Klebstoff auf Acrylatethylenbasis, einem Klebstoff auf Polycarbonatbasis, einem Polyethylenklebstoff, einem Epoxidklebstoff und einem Isocyanatklebstoff aufweist.

5. Batterie nach einem der Ansprüche 1 bis 3, wobei jedes des ersten Klebeelements (160a) und des zweiten Klebeelements (160b) eines oder eine Kombination aus einem lösungsmittelartigen Klebstoff, einem emulsionsartigen Klebstoff, einem heißschmelzartigen Klebstoff, einem flüssighärtenden Klebstoff und einem filmartigen Klebstoff ist.

6. Batterie nach einem der Ansprüche 1 bis 5, wobei jedes des ersten Klebeelements (160a) und des zweiten Klebeelements (160b) eine Schleifenform hat.

7. Batterie nach einem der Ansprüche 1 bis 5, wobei der Rahmen (110) in einer hohlen quadratischen Form ausgebildet ist, und
jedes von dem ersten Klebeelement (160a) und dem zweiten Klebeelement (160b) äußere Umfangsabschnitte hat, die mit äußeren Umfangsabschnitten des Rahmens (110) übereinstimmen.

8. Batterie nach einem der Ansprüche 1 bis 7, wobei das erste Klebeelement (160a) an eine Seite in einer Richtung aus der Ebene heraus des Rahmens (110) geklebt ist, und
das zweite Klebeelement (160b) an die andere Seite in der Richtung aus der Ebene heraus des Rahmens (110) geklebt ist.

9. Batterie nach einem der Ansprüche 1 bis 8, wobei der Rahmen (110) aufweist,
einen Rahmenkörper (119), der einen Hohlraum darin hat; und
einen Separatorträger (115), der von dem Rahmenkörper (119) nach innen zu dem Hohlraum vorsteht und den Separator (120) trägt, und
das erste Klebeelement (160a), das an eine Seite in der Richtung aus der Ebene heraus des Rahmenkörpers (119) geklebt ist, und das zweite Klebeelement (160b), das an die andere Seite in der Richtung aus der Ebene heraus des Rahmenkörpers (119) geklebt ist.

10. Batterie nach einem der Ansprüche 1 bis 9, wobei der Rahmen (110) aufweist,
einen Rahmenkörper (119), der einen Hohlraum darin hat; und
einen Separatorträger (115), der von dem Rahmenkörper (119) nach innen zu dem Hohlraum vorsteht und den Separator (120) trägt, und
jedes von dem ersten Klebeelement (160a) und dem zweiten Klebeelement (160b) in einer Richtung in der Ebene von der Mitte des Rahmens (110) weiter außen als der Separatorträger (115) angeordnet ist.

11. Batterie nach einem der Ansprüche 1 bis 10, ferner aufweisend:
eine erste Festkörperelektrode (150a), die in dem ersten Elektrodenreservoir (111a) angeordnet und konfiguriert ist, um mit der ersten Flüssigelektrode getränkt zu werden; und
eine zweite Festkörperelektrode (150b), die in dem zweiten Elektrodenreservoir (111b) angeordnet und konfiguriert ist, um mit der zweiten Flüssigelektrode getränkt zu werden,
wobei das erste Klebeelement (160a) in einer Richtung in der Ebene von der Mitte des Rahmens (110) weiter außen als die erste Festkörperelektrode (150a) angeordnet ist, und
das zweite Klebeelement (160b) in einer Richtung in der Ebene von der Mitte des Rahmens (110) weiter außen als die zweite Festkörperelektrode (150b) angeordnet ist.

12. Batterie nach einem der Ansprüche 1 bis 11, wobei jedes von dem ersten Klebeelement (160a) und dem zweiten Klebeelement (160b) in einer Richtung in der Ebene von der Mitte des Rahmens (110) weiter außen als der Separator (120) angeordnet ist.

13. Batterie nach einem der Ansprüche 1 bis 12, wobei das Zwischenelektrodenkommunikationsteil (112) zwischen dem ersten Klebeelement (160a) und dem zweiten Klebeelement (160b) angeordnet ist.

14. Batterie nach einem der Ansprüche 1 bis 13, wobei das Zwischenelektrodenkommunikationsteil (112) aufweist,
ein Zwischenelektrodenloch (1121) in dem Rahmen (110), das sich in der Richtung aus der Ebene heraus erstreckt;
eine erste Zwischenelektrodenleitung (1123a), die konfiguriert ist, um dem Zwischenelektrodenloch (1121) und dem ersten Elektrodenreservoir (111a) zu ermöglichen, in Fluidkommunikation miteinander zu stehen; und
eine zweite Zwischenelektrodenleitung (1123b), die konfiguriert ist, um dem Zwischenelektrodenloch (1121) und dem zweiten Elektrodenreservoir (111b) zu ermöglichen, in Fluidkommunikation miteinander zu stehen, und
wobei das erste Klebeelement (160a) die erste Zwischenelektrodenleitung (1123a) abdeckt und das zweite Klebeelement (160b) die zweite Zwischenelektrodenleitung (1123b) abdeckt.

15. Batterie nach einem der Ansprüche 1 bis 13, wobei das erste Klebeelement (160a) in einer Richtung in der Ebene von der Mitte des Rahmens (110) weiter außen als das erste Elektrodenreservoir (111a) angeordnet ist, und
das zweite Klebeelement (160b) in einer Richtung in der Ebene von der Mitte des Rahmens (110) weiter außen als das zweite Elektrodenreservoir (111b) angeordnet ist.

## Revendications

1. Batterie comprenant :
un premier collecteur de courant (130a) ;
un second collecteur de courant (130b) espacé du premier collecteur de courant (130a) ;
un séparateur (120) disposé entre le premier collecteur de courant (130a) et le second collecteur de courant (130b) ;
un cadre (110) formant un premier réservoir d'électrode (111a) entre le premier collecteur de courant (130a) et le séparateur (120), et un second réservoir d'électrode (111b) entre le second collecteur de courant (130b) et le séparateur (120), dans laquelle le premier réservoir d'électrode (111a) et le second réservoir d'électrode (111b) contiennent une première électrode liquide et une seconde électrode liquide, respectivement ;
un premier élément adhésif (160a) liant de manière adhésive le premier collecteur de courant (130a) et le cadre (110) l'un à l'autre ;
un second élément adhésif (160b) liant de manière adhésive le second collecteur de courant (130b) et le cadre (110) l'un à l'autre ; et
**caractérisée par** une partie de communication inter-électrodes (112) configurée pour permettre au premier réservoir d'électrodes (111a) et au second réservoir d'électrodes (111b) d'être en communication fluidique l'un avec l'autre,
dans laquelle au moins une partie de la partie de communication inter-électrodes (112) est formée entre le premier élément adhésif (160a) et le cadre (110) et/ou entre le second élément adhésif (160b) et le cadre (110).

2. Batterie selon la revendication 1, dans laquelle le premier élément adhésif (160a) assure l'étanchéité entre le premier collecteur de courant (130a) et le cadre (110), et
le second élément adhésif (160b) assure l'étanchéité entre le second collecteur de courant (130b) et le cadre (110).

3. Batterie selon la revendication 1 ou 2, dans laquelle le premier élément adhésif (160a) est disposé en couche entre le premier collecteur de courant (130a) et le cadre (110), et
le second élément adhésif (160b) est disposé en couche entre le second collecteur de courant (130b) et le cadre (110).

4. Batterie selon l'une quelconque des revendications 1 à 3, dans laquelle chacun du premier élément adhésif (160a) et du second élément adhésif (160b) comprend au moins l'un parmi un adhésif d'acrylate, un adhésif à base d'ester d'acrylate, un adhésif à base d'acrylate-éthylène, un adhésif à base de polycarbonate, un adhésif de polyéthylène, un adhésif époxy et un adhésif d'isocyanate.

5. Batterie selon l'une quelconque des revendications 1 à 3, dans laquelle chacun du premier élément adhésif (160a) et du second élément adhésif (160b) est l'un ou une combinaison d'un adhésif de type solvant, d'un adhésif de type émulsion, d'un adhésif de type thermofusible, d'un adhésif durcissant aux liquides et d'un adhésif de type film.

6. Batterie selon l'une quelconque des revendications 1 à 5, dans laquelle chacun du premier élément adhésif (160a) et du second élément adhésif (160b) a une forme de boucle.

7. Batterie selon l'une quelconque des revendications 1 à 5, dans laquelle le cadre (110) présente une forme carrée creuse, et
chacun du premier élément adhésif (160a) et du second élément adhésif (160b) a des parties périphériques externes correspondant aux parties périphériques externes du cadre (110).

8. Batterie selon l'une quelconque des revendications 1 à 7, dans laquelle le premier élément adhésif (160a) est collé à un côté directionnel hors plan du cadre (110), et
le second élément adhésif (160b) est collé à l'autre côté directionnel hors plan du cadre (110).

9. Batterie selon l'une quelconque des revendications 1 à 8, dans laquelle le cadre (110) comprend,
un corps de cadre (119) ayant un espace creux à l'intérieur de celui-ci ; et
un support de séparateur (115) faisant saillie vers l'intérieur du corps de cadre (119) vers l'espace creux et supportant le séparateur (120), et
le premier élément adhésif (160a) adhérant à un côté directionnel hors plan du corps de cadre (119), et le second élément adhésif (160b) adhérant à l'autre côté directionnel hors plan du corps de cadre (119).

10. Batterie selon l'une quelconque des revendications 1 à 9, dans laquelle le cadre (110) comprend,
un corps de cadre (119) ayant un espace creux à l'intérieur de celui-ci ; et
un support de séparateur (115) faisant saillie vers l'intérieur du corps de cadre (119) vers l'espace creux et supportant le séparateur (120), et
chacun du premier élément adhésif (160a) et du second élément adhésif (160b) est disposé davantage à l'extérieur que le support de séparateur (115) dans une direction dans le plan à partir du centre du cadre (110).

11. Batterie selon l'une quelconque des revendications 1 à 10, comprenant en outre :
une première électrode solide (150a) disposée dans le premier réservoir d'électrodes (111a) et conçue pour être imprégnée de la première électrode liquide ; et
une seconde électrode solide (150b) disposée dans le second réservoir d'électrode (111b) et conçue pour être imprégnée de la seconde électrode liquide,
dans laquelle le premier élément adhésif (160a) est disposé davantage à l'extérieur que la première électrode solide (150a) dans une direction dans le plan à partir du centre du cadre (110), et
le second élément adhésif (160b) est disposé davantage à l'extérieur que la seconde électrode solide (150b) dans une direction dans le plan à partir du centre du cadre (110).

12. Batterie selon l'une quelconque des revendications 1 à 11, dans laquelle chacun du premier élément adhésif (160a) et du second élément adhésif (160b) est disposé davantage à l'extérieur que le séparateur (120) dans une direction dans le plan à partir du centre du cadre (110).

13. Batterie selon l'une quelconque des revendications 1 à 12, dans laquelle la partie de communication inter-électrodes (112) est disposée entre le premier élément adhésif (160a) et le second élément adhésif (160b).

14. Batterie selon l'une quelconque des revendications 1 à 13, dans laquelle la partie de communication inter-électrodes (112) comprend,
un trou inter-électrodes (1121) dans le cadre (110) qui s'étend dans la direction hors plan ;
une première ligne inter-électrodes (1123a) conçue pour permettre au trou inter-électrodes (1121) et au premier réservoir d'électrodes (111a) d'être en communication fluidique l'un avec l'autre ; et
une seconde ligne inter-électrodes (1123b) conçue pour permettre au trou inter-électrodes (1121) et au second réservoir d'électrodes (111b) d'être en communication fluidique l'un avec l'autre, et
dans laquelle le premier élément adhésif (160a) couvre la première ligne inter-électrodes (1123a), et le second élément adhésif (160b) couvre la seconde ligne inter-électrodes (1123b).

15. Batterie selon l'une quelconque des revendications 1 à 13, dans laquelle le premier élément adhésif (160a) est disposé davantage à l'extérieur que le premier réservoir d'électrodes (111a) dans une direction dans le plan à partir du centre du cadre (110), et
le second élément adhésif (160b) est disposé davantage à l'extérieur que le second réservoir d'électrode (111b) dans une direction dans le plan à partir du centre du cadre (110).
